# EUROPÄISCHE PATENTANMELDUNG

(11) **EP 3 208 239 A1**
(43) Veröffentlichungstag der Anmeldung: **23.08.2017**
(21) Anmeldenummer: 16000391.9
(22) Anmeldetag: 17.02.2016
(51) Int. Cl.: C01G 23/053, C05D 9/00, C22B 34/12

(54) **VERWENDUNG VON ILMENITSAND ALS MINERALISCHER ZUSATZSTOFF IN DER LAND- UND FORSTWIRTSCHAFT**

(71) Anmelder: KRONOS INTERNATIONAL, INC., 51373 Leverkusen (DE)
(72) Erfinder: Medved, Mitja, 51375 Leverkusen (DE); Pierau, Thomas, 51371 Leverkusen (DE); Jungblut, Oya, 51379 Leverkusen (DE)

(57) **Zusammenfassung**

Die Erfindung richtet sich auf die Verwendung von Aufschlussrückständen aus dem Sulfatverfahren zur Herstellung von Titandioxid als mineralischer Zusatzstoff in Kompostierverfahren und zur Bodenverbesserung.

Der mineralische Zusatzstoff zeichnet sich durch eine Partikelgröße d50m von bevorzugt 10 bis 50 µm, eine poröse Struktur mit einer spezifischen Oberfläche (BET) von bevorzugt 5 bis 100 m²/g und einen gezielt eingestellten pH-Wert im Bereich von 2 bis 12 aus.

## Beschreibung

### Gebiet der Erfindung

Die Erfindung richtet sich auf die Verwendung von Aufschlussrückständen aus dem Sulfatverfahren zur Herstellung von Titandioxid als Hilfsmittel in Kompostierverfahren und zur Bodenverbesserung.

### Technologische Hintergrund der Erfindung

Gesteinsmehle werden regelmäßig als Hilfsmittel zur Bodenverbesserung eingesetzt, beispielsweise als Spurenelementlieferant oder zur Verbesserung der Bodenstruktur. Die kommerziell angebotenen Gesteinsmehle basieren vielfach auf Basalt oder Diabas. Sie werden typischerweise durch Mahlung hergestellt, weisen eine Partikelgröße von 95 Gew.-% < 90 µm auf und sind mit einer spezifischen Oberfläche von beispielsweise 2,5 m²/g wenig porös.

Darüber hinaus werden auch poröse Gesteinsmehle bzw. Mineralstoffe wie Bimssteinmehl, Lavamehl, Zeolithe oder Tonminerale zur Bodenverbesserung eingesetzt. Gegenüber den wenig porösen Gesteinsmehlen regulieren die porösen Gesteinsmehle auch den Wasserhaushalt, lagern Mineralien oder organische Substanzen ein und können Gerüche bekämpfen. Des Weiteren zeigen Gesteinsmehle je nach pH-Wert eine Wirkung als pH-Puffer im Boden.

### Aufgabenstellung und Kurzbeschreibung der Erfindung

Der Erfindung liegt die Aufgabe zugrunde, einen alternativen mineralischen Zusatzstoff als Hilfsstoff für die Land- und Forstwirtschaft und Tierhaltung zur Verfügung zu stellen.

Die Aufgabe wird gelöst durch einen mineralischen Zusatzstoff basierend auf den bei der Herstellung von Titandioxid nach dem Sulfatverfahren beim schwefelsauren Aufschluss von titanhaltigen Rohstoffen anfallenden unlöslichen Aufschlussrückständen zur Verwendung in der Land- und Forstwirtschaft und in der Tierhaltung.

Weitere vorteilhafte Ausformungen der Erfindung sind in den Unteransprüchen angegeben.

### Figuren

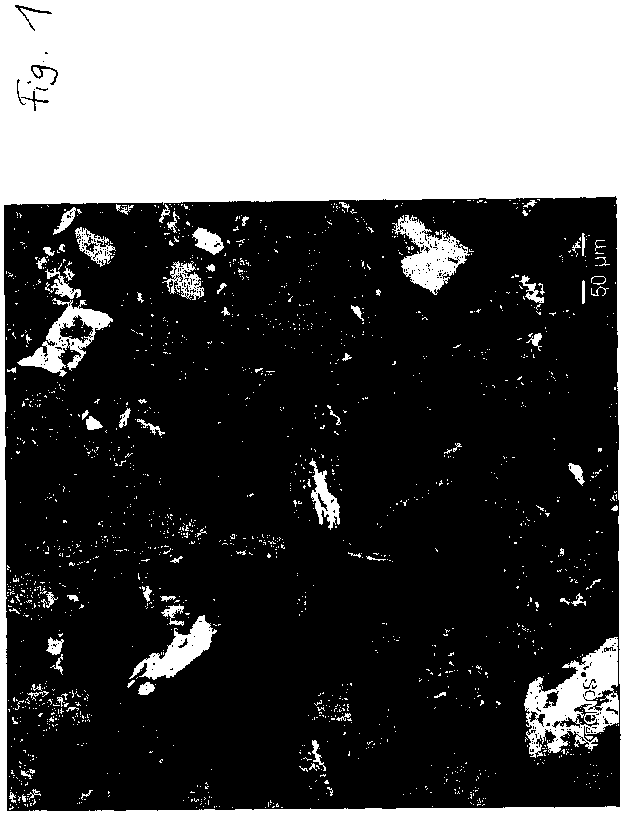

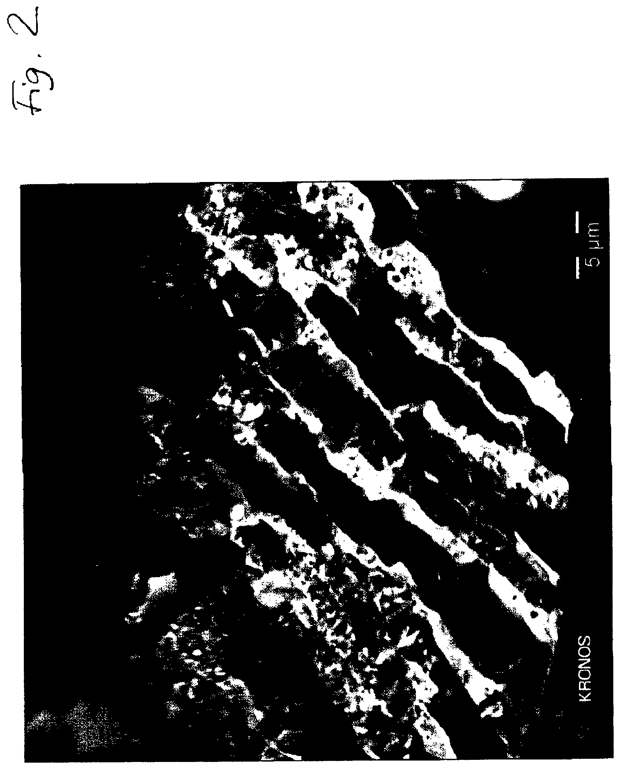

- Figuren 1 und 2:: Rasterelektronenmikroskopaufnahmen von typischem Ilmenitsand

### Beschreibung der Erfindung

Alle im Folgenden offenbarten Angaben bezüglich Größe in µm usw., Konzentration in Gew.-% oder Vol.-%, pH-Wert usw. sind so zu verstehen, dass alle Werte, die im Bereich der dem Fachmann bekannten jeweiligen Messgenauigkeit liegen, mit umfasst sind.

Im Rahmen der Patentanmeldung wird unter Ilmenitsand der Aufschlussrückstand verstanden, der im Rahmen des Sulfatverfahrens zur Herstellung von Titandioxid nach dem schwefelsauren Aufschluss der eingesetzten titanhaltigen Rohstoffe als unlöslicher Rückstand anfällt.

Ilmenitsand ist ein schluffiger Sand aus in Schwefelsäure unlöslichen Gangartmineralien wie i.w. Quarz, Feldspat, Pyroxen und anderen Silikaten und Oxiden und weist eine typische poröse Struktur auf (Fig. 1 und 2). Aus dem Prozess wird Ilmenitsand mit einer Feuchte von bis zu 25 Gew.-% gewonnen.
Die poröse Struktur wird durch das Lösen der im Rohstoff, z.B. Ilmeniterz, vorhandenen Eisen- und Titankomponenten, beispielsweise durch Herauslösung von Ilmenit und lamellarem Hämatit, gebildet.
Der Ilmenitsand weist bevorzugt eine mittlere Partikelgröße d50m (Median) von 10 bis 50 µm, insbesondere von 15 bis 30 µm auf. In der Regel sind 80 bis 95 Gew.-%, bevorzugt 90 bis 95 Gew.-% der Partikel kleiner als 100 µm. Die spezifische Oberfläche (BET) beträgt zwischen 5 bis 100 m²/g, bevorzugt 10 bis 20 m²/g.
Der pH-Wert des Ilmenitsands liegt aufgrund des Herstellungsverfahrens bei Werten zwischen 2 und 4 und kann alternativ durch basische Nachbehandlung, beispielsweise durch Zumischung von alkalischen Verbindungen wie Kalk, Kalkstein oder anderen Gesteinsmehlen wie Tone oder Diabas auf beliebige pH-Werte im Bereich von 2 bis 12 anwendungsspezifisch eingestellt werden. Ilmenitsand kann also als mineralischer Zusatzstoff sauren, neutralen oder basischen Charakter aufweisen.
Darüber hinaus können weitere Inhaltstoffe wie beispielsweise Eisen, Stickstoff, Phosphor, Kalium oder Spurenelemente (wie z.B. Mangan, Zink, etc.) anwendungsspezifisch, durch Zugabe der entsprechenden Stoffe bzw. Verbindungen variiert werden.
Typische Zusammensetzungen eines basisch eingestellten Ilmenitsands (pH-Wert zwischen 8 und 11) sind in den Tabellen 1 und 2 dargestellt.

**Tabelle 1: Oxidgehalte und Mineralbestand**

| Oxid | Gew.-% | Mineral |
|---|---|---|
| TiO₂ | 27 - 33 | Ilmenit |
| FeO | 24 - 28 | Ilmenit, Magnetit, Härnatit |
| SiO₂ | 17 - 23 | Pyroxen, Feldspat, Quarz |
| MgO | 6 - 9 | Pyroxen, Spinel, Amphibol |
| CaO | 5 - 8 | Feldspat, Pyroxen, Amphibol, Gips |
| Al₂O₃ | 2 - 4 | Feldspat, Spinel, Amphibol |
| SO₄²⁻ | 5 - 8 | Gips |

**Tabelle 2: Spurenelemente**

| | |
|---|---|
| Na | 3000 - 5000 ppm |
| Mn | 500 - 2000 ppm |
| Zr | 500 - 1500 ppm |
| V | 400 - 800 ppm |
| Zn | 300 - 1000 ppm |
| Cr | 200 - 600 ppm |
| Ni | 200 - 500 ppm |
| Cu | 100 - 400 ppm |
| Nb | 50 - 100 ppm |
| Pb | <6 ppm |
| Hg | <1 ppm |
| As | <1 ppm |
| Cd | <0,1 ppm |

Ilmenitsand kann wie die bekannten Gesteinsmehle in folgenden Einsatzgebieten Anwendung finden:
- als Kompostierhilfsstoff zur mineralischen Aufwertung des gebildeten Humus, zur Verbesserung des Humusgefüges und der Krümelbildung sowie zur Bekämpfung von unerwünschten Fäulnisprozessen und Gerüchen.
- zur Bodenverbesserung durch direkte Ausbringung mit dem Ziel der Erhöhung des Mineralhaushaltes, beispielsweise durch Bereitstellung der Spurenelemente Silicium, Eisen und Mangan.
- als Bindemittel und Zusatzstoff zu Einstreumaterialien in der Tierhaltung, beispielsweise Geflügelhaltung.
- als Güllezusalzstoff, um die Ausbringung der Gülle zu erleichtern sowie um die Geruchbelästigung und den Stickstoffverlust durch Ammoniakausgasung zu reduzieren. Des Weiteren bleiben die Bestandteile der Gülle, da sie an den Ilmenitsand gebunden sind, im Boden länger verfügbar.
- als Mineralstofflieferant bei der Tierfütterung und Tierfutterherstellung.

Typische Dosiermengen liegen bei der Kompostierung zwischen 1 und 5 kg pro m³ Rotte bzw. 50 bis 70 kg pro t Kompostmasse, bei der Bodenverbesserung zwischen 10 und 30 kg pro 100 m² und bei der Güllebehandlung zwischen 10 und 50 kg pro m³ Gülle.

Die poröse Struktur des Ilmenitsands wirkt sich sowohl bei der Kompostierung als auch im Boden förderlich auf die Bildung der Krümelstruktur und den Aufbau eines mit Mineralstoffen ergänzten Humuskomplexes sowie auf den Verwitterungsprozess aus, durch den die Spurenelemente freigesetzt werden. Somit werden beispielsweise im Kompost gebildete Stickstoffverbindungen in den porösen Strukturen des Ilmenitsands vor Auslaugung geschützt eingelagert und bleiben für einen längeren Zeitraum bioverfügbar.

Im Gegensatz zu den kommerziell angebotenen klassischen "sauren" Gesteinsmehlen basierend beispielsweise auf Basalt, die einen pH-Wert von 6 bis 6,5 aufweisen, weist Ilmenitsand aufgrund des Herstellungsverfahrens einen pH-Wert von 2 bis 4 auf. Durch Zugabe bzw. durch Zumischung von alkalischen Verbindungen wie Kalk bzw. Kalkstein und Gesteinsmehlen wie Tone oder Diabas lässt sich das Milieu im Ilmenitsand gezielt einstellen und hierbei in einem breiten pH-Wert Bereich nutzen. Die alkalischen Verbindungen und Gesteinsmehle können Ilmenitsand in einem beliebigen Verhältnis zugemischt werden, um je nach der Zielanwendung die gewünschten pH-Werte und Zusammensetzungen einzustellen. Die Zumischung kann beispielsweise durch Misch- und Transportschnecken erfolgen.

Beispielsweise bei der Kultivierung von Moorpflanzen (z.B. Heidelbeeren, Rhododendren), die keine pH-Werte größer 6 tolerieren, zeigt sauer eingestellter Ilmenilsand Vorzüge gegenüber dem als sauer geltenden Basalt-Gesteinsmehl, welches einen pH-Wert größer 6 aufweist. Des Weiteren lassen sich mit sauer eingestelltem Ilmenitsand auch Calcium-reiche Böden wie Ton oder Lehme verbessern.

Alkalisch eingestellter Ilmenitsand hat eine positive Wirkung auf die Aktivierung des Bodenlebens in sauren Böden.

Ilmenitsand mit einem pH-Wert von 10 bis 12 eignet sich beispielsweise auch zum Abbinden von Hühnermist, der üblicherweise einen pH-Wert von 3 bis 5 aufweist.

## Patentansprüche

1. Mineralischer Zusatzstoff basierend auf den bei der Herstellung von Titandioxid nach dem Sulfatverfahren beim schwefelsauren Aufschluss von titanhaltigen Rohstoffen anfallenden unlöslichen Aufschlussrückständen zur Verwendung in der Land- und Forstwirtschaft und in der Tierhaltung.

2. Mineralischer Zusatzstoff nach Anspruch 1 **dadurch gekennzeichnet, dass** die mittlere Partikelgröße d50m von 10 bis 50 µm und bevorzugt von 15 bis 30 µm beträgt.

3. Mineralischer Zusatzstoff nach Anspruch 1 oder 2 **dadurch gekennzeichnet, dass**
die spezifische Oberfläche (BET) von 5 bis 100 m²/g und bevorzugt von 10 bis 20 m²/g beträgt.

4. Mineralischer Zusatzstoff nach einem oder mehreren der Ansprüche 1 bis 3 **dadurch gekennzeichnet, dass**
der pH-Wert im Bereich von 2 bis 12 liegt.

5. Verwendung des mineralischen Zusatzstoffs nach den Ansprüchen 1 bis 4 als Kompostierhilfsstoff, zur Bodenverbesserung, als Bindemittel und Zusatzstoff in der Tierhaltung, als Güllezusatzstoff oder in Tierfutter.
